## Europäisches Patentamt
## European Patent Office
## Office européen des brevets

(19)

(11) Numéro de publication: **0 131 517**
**A2**

(12)

# DEMANDE DE BREVET EUROPEEN

(21) Numéro de dépôt: **84401436.5**

(22) Date de dépôt: **06.07.84**

(51) Int. Cl.⁴: **G 01 V 3/20**
**E 21 B 23/04**

(30) Priorité: **06.07.83 US 511412**

(43) Date de publication de la demande:
**16.01.85 Bulletin 85/3**

(84) Etats contractants désignés:
**AT DE FR GB IT NL SE**

(71) Demandeur: **SOCIETE DE PROSPECTION ELECTRIQUE SCHLUMBERGER**
**42, rue Saint-Dominique**
**F-75340 Paris Cedex 07(FR)**

(84) Etats contractants désignés:
**FR IT**

(71) Demandeur: **Schlumberger Limited**
**277 Park Avenue**
**New York, N.Y. 10172(US)**

(84) Etats contractants désignés:
**DE GB NL SE AT**

(72) Inventeur: **Ohmer, Hervé**
**23, rue Philippe de Champaigne**
**F-78180 Voisins le Bretonneux(FR)**

(74) Mandataire: **Chareyron, Lucien et al,**
**Schlumberger Limited Service Brevets c/o Giers 12, place des Etats Unis B.P. 121**
**F-92124 Montrouge Cédex(FR)**

(54) **Mécanisme de bras supportant un patin de sonde de diagraphie.**

(57) L'invention concerne une sonde de diagraphie destinée à être déplacée dans un forage (12), comportant un corps (304) de sonde et au moins un patin (302) de mesure, ainsi qu'un appareil pour appliquer ledit patin de mesure contre la paroi du forage. Le patin (302) est monté sur un dispositif à bras (344, 300) articulé sur le corps de sonde. Selon l'invention, le dispositif à bras comprend un dipositif d'actionnement (322) pourvu d'un élément mobile (324), un contre-bras (344) monté pivotant sur ledit dispositif à bras et relié positivement au dit élément mobile et des moyens élastiques (352) permettant d'écarter ledit contre-bras vers l'extérieur du corps de sonde afin que ce dernier vienne au contact de la paroi du forage du côté diamétralement opposé au dit patin; avantageusement, le bras et le corps de sonde sont reliés élastiquement pour permettre d'excentrer la sonde par rapport à l'axe du forage.

./...

FIG. 14

# MECANISME DE BRAS SUPPORTANT UN PATIN DE SONDE DE DIAGRAPHIE

La présente invention concerne d'une manière générale la mesure de résistivité de formations géologiques à partir d'un forage traversant ces formations, et plus précisément, la mesure de la résistivité et/ou de l'épaisseur d'une ou plusieurs zones entourant le forage.

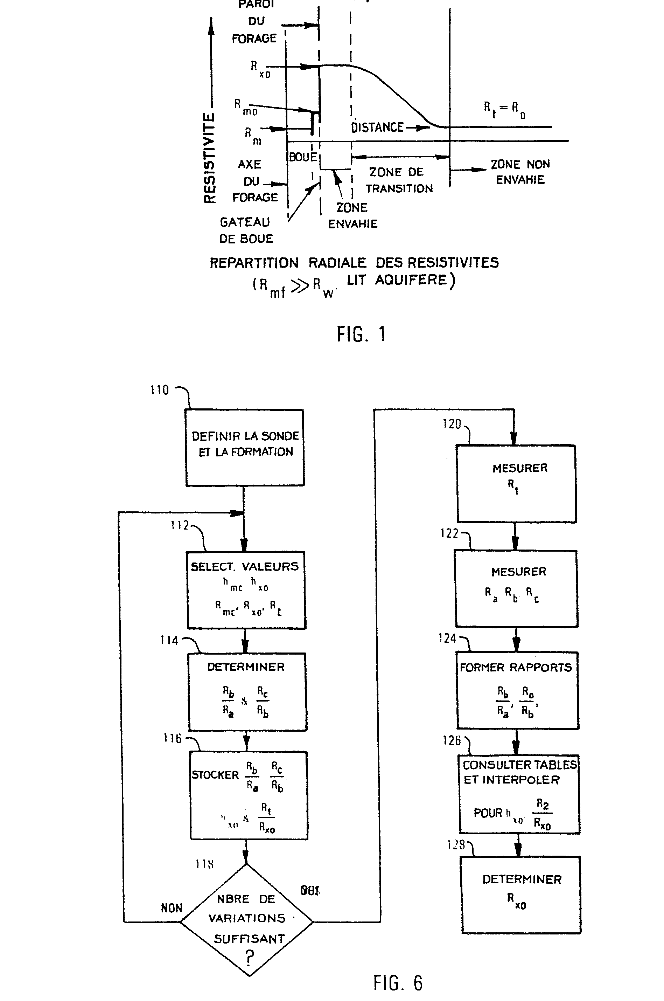

Dans de nombreuses opérations de forage, la boue présente dans le forage se trouve dans des conditions telles que la pression hydrostatique de la colonne de boue est supérieure à la pression des fluides des formations. L'effet de ces conditions est illustré dans la figure 1, qui représente un exemple de répartition radiale des résistivités dans un lit aquifère.

La pression différentielle contraint le filtrat de boue à envahir les formations perméables traversées par le forage, de sorte que des particules solides de la boue se déposent sur la paroi du forage en formant un gâteau de boue de résistivité $R_{mc}$. En général, ce gâteau de boue présente une très faible résistivité et réduit considérablement le taux d'infiltration au fur et à mesure qu'il se forme. Cependant, dans la zone des formations entourant immédiatement le forage, la totalité de l'eau des formations et une partie des hydrocarbures éventuellement présents, sont chassés par le filtrat. Cette zone est appelée la zone envahie et sa résistivité est exprimée par $R_{xo}$ . A plus grande distance du forage, le déplacement des fluides des formations est moins important et moins complet, ce qui conduit à une zone de transition dans laquelle il se produit une variation progressive de la résistivité, de $R_{XO}$ à la résistivité de la formation non envahie $R_t$. La profondeur latérale d'invasion dépend en partie de la perméabilité de la formation et est très variable, allant de moins d'un centimètre à plusieurs dizaines de centimètres.

Les mesures de $R_{XO}$ sont importantes pour plusieurs raisons. Lorsque l'invasion est modérée à profonde, la connaissance de $R_{XO}$ permet de déterminer de façon plus précise la vraie résistivité $R_t$ qui est liée à la saturation en hydrocarbures. De plus, certains procédés de calcul de la saturation utilisent comme paramètre le rapport $R_{XO}/R_t$. De même, dans des formations propres, une valeur du facteur de formation F peut être calculée à partir de $R_{XO}$ et de la résistivité du filtrat de boue "$R_{mf}$", si l'on connaît ou si l'on peut estimer la saturation du filtrat de boue "$S_{XO}$". A partir de F, on peut déterminer une valeur de la porosité. Une application plus récente des données de $R_{XO}$ a trait à l'évaluation complète des effets des hydrocarbures sur les diagrammes de neutrons et de densité, et font partie intégrante des services SARABAND$^{-TM}$ et CORIBAND$^{-TM}$ fournis par la Schlumberger Technology Corporation, Houston, Texas. En outre, la comparaison de $R_{XO}$ et de $R_t$ est utile pour la connaissance de la mobilité des hydrocarbures.

Non seulement l'art antérieur a permis de démontrer l'utilité de la mesure de $R_{XO}$ , mais il s'est également intéressé à l'acquisition d'informations indicatrices des positions de discontinuités latérales des résistivités électriques des matériaux entourant le forage, pour déterminer le diamètre du forage et la profondeur d'invasion des fluides. A titre d'exemple, le brevet américain No. 2.754.475 (inventeur déclaré : Norelius; délivré le 10 juillet 1956), indique que des mesures de résistance peuvent être faites à des profondeurs latérales variant de façon continue dans le forage et la formation entourant le forage, en mesurant en plusieurs points du forage la résistivité moyenne de la formation et du fluide du forage contenu à l'intérieur d'enveloppes sphériques respectives. Ces enveloppes sont établies par un champ électrique convergeant de façon pratiquement radiale à travers les formations adjacentes vers une électrode d'entrée située dans le fluide à l'intérieur du puits de forage. Le rayon du forage, la profondeur d'invasion et la position de la formation envahie, peuvent être déterminés par identification des éventuelles discontinuités apparaissant dans le diagramme.

Cependant, les spécialistes ont établi qu'un dispositif à patin venant au contact de la paroi était le plus approprié à la mesure d'invasions de faibles profondeurs. De nombreux dispositifs de ce type ont été proposés, dont l'un est décrit dans le brevet américain No. 2.669.688 (Doll, délivré le 16 février 1954). L'un des modes de réalisation décrit dans le brevet de Doll No. 2.669.688 met en jeu un système à trois électrodes comprenant une électrode de courant et deux électrodes de mesure du potentiel, le retour du courant s'effectuant par le câble. Les mesures réalisées avec ce système sont représentatives des résistivités à des profondeurs latérales d'investigation différentes et de faible valeur. L'une des profondeurs d'investigation est approximativement égale à l'épaisseur probable du gâteau de boue sur la paroi du forage, l'autre étant légèrement supérieure, de façon à inclure le gâteau de boue et au moins une partie de la zone adjacente de la formation qui a été envahie par le filtrat de boue. Comme la présence du gâteau de boue sur la paroi d'un forage est une indication d'infiltration de la formation par le filtrat de boue, l'interprétation des mesures ainsi faites permet d'identifier les formations perméables. Une troisième mesure à une autre profondeur latérale d'investigation de faible valeur facilite aussi l'identification de formations perméables. Voir par exemple le brevet américain No. 2.965.838 (Kister, délivré le 20 décembre 1960).

Cependant, pour mesurer de façon précise la valeur de $R_{XO}$, la mesure ne doit pas être perturbée par le forage ou doit pouvoir être corrigée. Des mesures effectuées à différentes profondeurs d'investigation latérale de faibles valeurs peuvent être corrigées lorsque au moins l'une des mesures fournit avec précision la résistivité du gâteau de boue. Voir par exemple le brevet de Kister. Les effets du forage sur les mesures de $R_{XO}$ peuvent cependant être minimisés par l'utilisation de courants de focalisation pour agir sur le trajet parcouru par le courant d'analyse. Les effets du forage, d'autant plus importants que l'épaisseur du gâteau de boue augmente, apparaissent lorsque le courant d'analyse regagne le forage en suivant le trajet de résistance relativement faible formé par le gâteau de boue, de sorte que la mesure de la formation est fortement influencée par la résistivité du gâteau de boue. Plusieurs appareils ont été proposés pour résoudre ce problème. Le système à patin focalisé décrit dans le brevet américain 2.712.629 (Doll, délivré le 5 juillet 1955) est particulièrement approprié à une utilisation où des gâteaux de boue d'épaisseurs minimales à modérées sont présents dans des boues salines. Le système à patin focalisé du brevet No. 3.132.298 (Doll et Al, délivré le 5 mai 1964) est un appareil qui se comporte de façon satisfaisante dans des gâteaux de boue relativement épais. Plus récemment, des outils à électrodes montés sur patin ont été mis au point et permettent d'obtenir $R_{XO}$ avec une meilleure précision, en particulier dans des boues épaisses. Ce nouveau type d'outil de diagraphie de puits a été mentionné sous le nom d'appareil à focalisation sphérique et est décrit dans le brevet américain No. 3.760.260 (Schuster, délivré le 18 septembre 1973). Le système à focalisation sphérique a également été proposé pour déterminer l'épaisseur latérale du gâteau de boue et $R_{XO}$. Voir par exemple le brevet américain No. 3.973.188 (Attali et Al., délivré le 3 août 1976). Tous les outils de mesure de microrésistivité à focalisation mentionnés ci-dessus fournissent des mesures satisfaisantes de $R_{XO}$ dans certaines conditions, bien qu'aucun d'entre eux ne fournisse des valeurs de $R_{XO}$ précises dans toutes les conditions.

Les dispositifs à patin pour le contact avec la paroi ont également été utilisés pour déterminer le pendage. Les dispositifs de détermination du pendage, connus dans la technique sous le nom de pendagemètres, utilisent essentiellement quatre patins qui sont appliqués sur la paroi du forage suivant deux diamètres perpendiculaires. Généralement, chaque patin contient un capteur qui effectue l'investigation des caractéristiques des formations entourant immédiatement le patin. Voir par exemple le brevet américain No. 3.060.373 (Doll, 23 octobre 1962). Un patin individuel peut être équipé de plusieurs électrodes afin d'améliorer la démarcation entre les frontières séparant les lits (voir par exemple Doll, brevet 3.060.373); d'augmenter le rapport signal à bruit du pendage (voir par exemple le brevet américain No. 3.521.154 (Maricelli, 21 juillet 1970); d'éliminer les variations de vitesse provoquées par l'effet dit de "yoyo" (voir même référence); ou de permettre une corrélation plus détaillée d'éléments des signaux correspondant à des variations verticales des caractéristiques de la formation (voir par exemple le brevet américain No. 4.251.773) Cailliau et Al., 17 février 1981).

Les pendagemètres utilisent généralement des systèmes à électrodes focalisées de façon passive pour contraindre le courant d'analyse à pénétrer latéralement jusqu'à une distance appréciable dans la formation géologique adjacente. En général, l'électrode de courant de focalisation est une surface métallique qui forme la majeure partie de la surface du patin. Au centre de la surface du patin se trouve une cavité recouverte d'une couche de matériau isolant. Une électrode à courant d'analyse est disposée dans la cavité et est séparée du patin métallique proprement dit par le matériau isolant. Le courant d'analyse émis par l'électrode d'analyse est contraint à pénétrer latéralement dans la formation géologique adjacente par le courant émis par l'électrode de focalisation. Un courant de focalisation supplémentaire peut être émis par la surface conductrice du corps de sonde du pendagemètre. Lorsque plusieurs électrodes d'analyse sont prévues, les électrodes supplémentaires sont totalement entourées par l'électrode de focalisation de telle manière que les faisceaux de courant d'analyse respectifs soient focalisés de la façon décrite ci-dessus par le courant émis par l'électrode de focalisation. Le retour de courant peut s'effectuer par l'intermédiaire de l'électrode de retour B située à l'extrémité inférieure du câble multiconducteurs, comme décrit dans le brevet américain No. 3.060.373 de Doll, ou par l'intermédiaire d'un élément du corps de l'outil, comme c'est le cas dans le brevet de Cailliau et Al.

Dans les systèmes de mesure du pendage de l'art antérieur, les faisceaux de courant d'analyse sont focalisés de façon à pénétrer relativement profondément dans la formation géologique faisant face à l'élément de patin, de telle manière qu'une partie appréciable de la résistance électrique s'opposant au faisceau dans la formation géologique, soit due à la partie non contaminée des formations, même si cette zone est éloignée du forage proprement dit par un gâteau de boue et une zone envahie. En outre, la focalisation et la profondeur de pénétration de tous les courants d'analyse sont en règle générale pratiquement identiques, pour faciliter la détermination du pendage et, dans le cas d'un outil à patin à électrodes multiples, pour faciliter l'annulation du bruit, la correction de vitesse et/ou une corrélation plus détaillée de certaines caractéristiques du signal.

En conséquence, l'un des buts de la présente invention est de fournir un bras pouvant être adapté et utilisé dans n'importe quel outil à patin; son usage est particulièrement avantageux dans le cas de l'outil de diagraphie décrit ci-après. Un autre but de l'invention est de fournir un bras relativement long, tout en minimisant le volume qu'il occupe dans la sonde de diagraphie.

Selon un premier aspect de l'invention, une sonde de diagraphie de puits comprend:

- un corps allongé pour se déplacer le long d'un forage,

- un patin de mesure prévu pour venir en contact avec la paroi du forage,

- un dispositif à bras portant ce patin et articulé sur ce corps pour permettre un écartement latéral dudit patin, ledit dispositif à bras comportant:

- un dispositif d'actionnement comportant un élément mobile,

- un contre-bras monté pivotant sur ledit dispositif à bras et relié positivement audit élément mobile et

- des moyens élastiques pour écarter ledit contre-bras vers l'extérieur dudit corps pour venir au contact de la paroi du forage du côté diamétralement opposé audit patin, ledit élément mobile étant actionnable sélectivement pour ramener ledit contre-bras contre l'action desdits moyens élastiques.

Des variantes et d'autres caractéristiques du premier aspect de l'invention sont caractérisées dans les revendications 2 à 6.

Selon un second aspect de l'invention, un appareil destiné à contraindre l'application du patin de mesure d'une sonde de diagraphie d'un puits, sur la paroi d'un forage traversant une formation souterraine, comporte:

- un bras primaire comprenant un dispositif d'actionnement pourvu d'un élément mobile et un élément de prolongement solidaire dudit dispositif d'actionnement et articulé sur le corps de ladite sonde,

- un contre-bras monté pivotant sur ledit élément de prolongement du côté diamétralement opposé audit bras primaire et positivement relié audit élément mobile, et

- des moyens élastiques pour écarter ledit contre-bras vers l'extérieur du corps de ladite sonde pour l'amener en contact avec la paroi du forage.

Une autre caractéristique du second aspect de l'invention est caractérisée dans la revendication 8.

Dans le dispositif de diagraphie décrit ci-après, le patin et le corps de sonde coopèrent pour accroître la focalisation du courant d'analyse émis par chacune des électrodes de courant située sur le patin. Une partie de la focalistion est induite par deux parties conductrices du corps de la sonde espacées l'une de l'autre par une partie isolante. Conformément à la présente invention, le déplacement longitudinal du patin par rapport au corps de sonde est maintenu pratiquement constant grâce au bras allongé qui supporte le patin et qui fait partie intégrante d'un mécanisme compact.

D'autres buts, aspects et caractéristiques de l'invention apparaîtront à la lecture de la description détaillée et des revendications ci-après, faites en référence aux dessins annexés.

Dans les dessins, dans lesquels les mêmes numéros de référence désignent des parties identiques :

- la figure 1 (art antérieur) est un graphique représentant la répartition radiale de résistivités dans un lit aquifère où $R_{mf}$ est significativement plus élevé que $R_w$;

- la figure 2 est une vue de côté d'un mode de réalisation d'un outil de diagraphie de forages selon l'invention, dans lequel la formation géologique traversée par le forage est illustrée en coupe et les équipements de surface sont illustrés de façon schématique;

- la figure 3 est une vue de face de la surface d'un mode de réalisation du patin pour le contact avec la paroi, selon la figure 2;

- la figure 4 est une vue transversale longitudinale du patin de la figure 3, dans laquelle les circuits électroniques associés au patin sont représentés de façon schématique;

- la figure 5 est un graphique destiné à expliquer l'utilisation des signaux produits conformément à la présente invention;

- la figure 6 est un organigramme destiné à expliquer la création et l'utilisation du graphique de la figure 5;

- la figure 7 est un organigramme expliquant l'utilisation des signaux produits par un mode de réalisation de la présente invention comportant plus de trois électrodes de courant;

- la figure 8 est un graphique servant à expliquer certains stades de l'organigramme de la figure 7;

- la figure 9 est une représentation plane d'un autre mode de réalisation d'un outil de diagraphie des forages selon l'invention, dans laquelle la formation géologique traversée par le forage est illustrée en coupe transversale et les équipements de surface sont illustrés de façon schématique;

- la figure 10 est une vue de face d'un mode de réalisation du patin pour le contact avec la surface représenté figure 9;

- la figure 11 est une coupe transversale longitudinale du patin de la figure 10, dans laquelle les circuits électroniques associés au patin sont représentés de façon schématique;

- la figure 12 est une vue en coupe transversale latérale du patin de la figure 10;

- la figure 13 est un graphique destiné à expliquer la densité de courant à la surface du patin de la figure 10;

- la figure 14 est une vue plane d'un mécanisme de bras selon la présente invention, destiné à excentrer la sonde de mesure de résistivité et à maintenir le patin en contact avec la paroi du forage, dans laquelle la formation géologique traversée par le forage est représentée en coupe transversale et le mécanisme est représenté en position patin écarté;

- la figure 15 est une vue plane du mécanisme de bras de la figure 14 représenté en position patin rentré; et

- la figure 16 est une vue en coupe transversale latérale du mécanisme de la figure 15 selon le plan F16-F16.

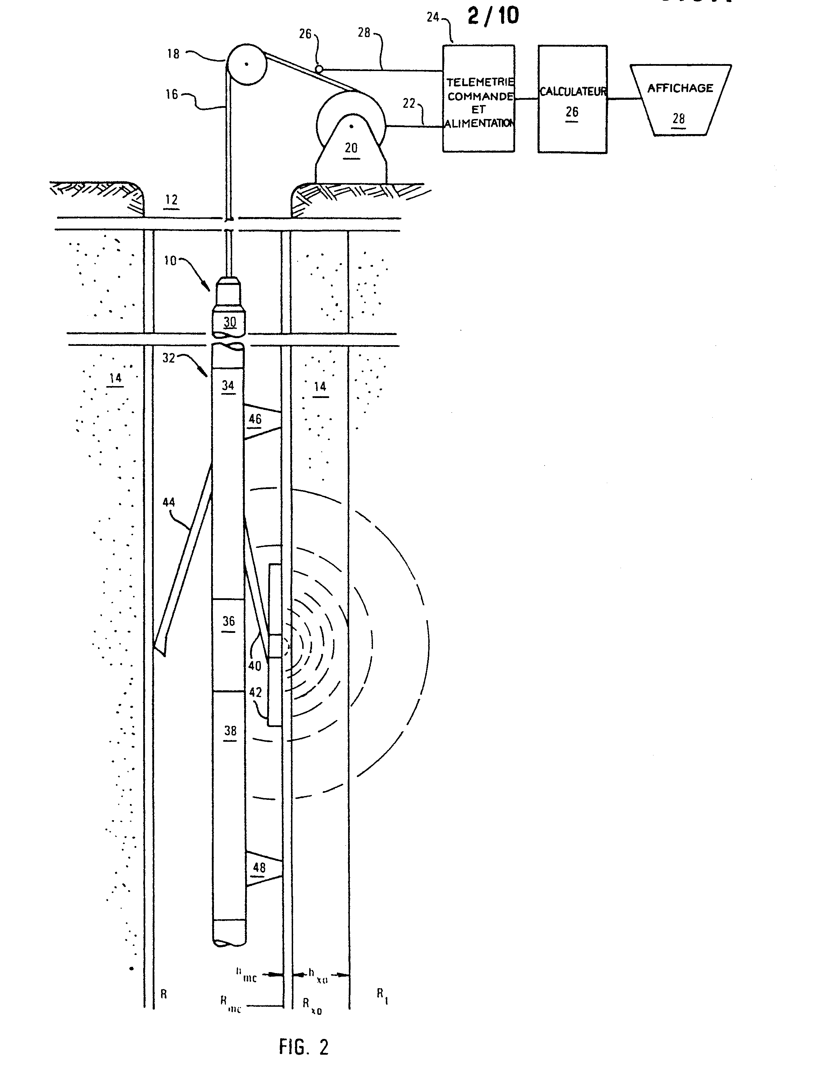

La figure 2 montre un mode de réalisation d'un outil 10 de diagraphie de forage. L'outil est disposé dans un forage 12 traversant une formation géologique 14. Le forage 12 est rempli d'une boue de forage appropriée. L'extrémité de l'outil 10 la plus proche de la surface est reliée par l'intermédiaire d'un câble blindé multiconducteurs 16 à un appareil approprié à la surface du sol, pour soulever et abaisser l'outil 10 dans le forage 12. Le câble multiconducteurs 16 passe sur une poulie 18 pour s'enrouler sur un mécanisme de treuil 20. Le raccord électrique entre les divers conducteurs du câble du multiconducteurs 16 et les circuits de télémétrie, de commande et d'alimentation 24 situés à la surface du sol, s'effectue au moyen d'un câble 22 et d'un dispositif de contact à bague collectrice et à balais à plusieurs éléments appropriés faisant partie intégrante du mécanisme de treuil 20. Les informations concernant la profondeur du câble sont fournies par la roue de mesure 26 et transférées par l'intermédiaire du câble 28 aux circuits de télémétrie, de commande et d'alimentation 24. Les signaux provenant de l'outil 10 contenant les informations sur l'une des caractéristiques de la formation 14 sont fournis au calculateur 26 par les circuits de télémétrie, de commande et d'alimentation 24. Un diagramme de la carctéristique de la formation en fonction de la profondeur est produit par le calculateur 26 et fourni à un dispositif d'affichage 28 en vue d'être visualisé pour un utilisateur.

L'outil 10 comprend un certain nombre de parties individuelles, parmi lesquelles plusieurs cartouches, désignées dans leur ensemble en 30, pour alimenter en énergie l'outil 10 et commander son fonctionnement, pour prétraiter les signaux de mesure, et pour fournir une interface de télémétrie entre l'électronique descendant dans le forage et le câble 16; et une sonde indiquée globalement en 32 destinée à fournir des siganux de mesure selon la présente inventon. La sonde 32 comporte 3 parties allongées longitudinalement adjacentes 34, 36 et 38. Les parties 34 et 38 sont constituées d'un métal électriquement conducteur tel que l'acier inoxydable. La partie 36, qui est placée entre les parties de sonde conductrices 34 et 38 joue le rôle d'isolant. Un agencement adéquat, qui est décrit dans le brevet de Doll No. 3.060.373 mentionné ci-dessus, comprend un manchon en résine époxy ou viton disposé autour de parties faisant saillie sur les sections 34 et 38 qui sont reliées de façon non conductrice les unes aux autres. La partie 34 porte en outre un bras 40 auquel est fixé un patin ou sabot 42 pour le contact avec la paroi, ainsi qu'un contra-bras 44. Le contre-bras 44 et le bras 40 coopèrent de préférence, bien que non nécessairement, pour excentrer la sonde 32 dans le forage 12. La sonde 32 et le patin 42 sont maintenus sensiblement dans un plan de symétrie passant par le centre de chacun d'entre eux, par le bras 40. Deux éléments de frottement 46 et 48, respectivement solidaires des parties 34 et 38 et tous deux alignés angulairement avec le patin 42 par rapport à l'axe central de la sonde 32, sont prévus pour empêcher la sonde 32 d'entrer en contact avec la paroi du forage 12. Les éléments 46 et 48 sont de préférence constitués d'un matériau à faible frottement, tel que le bronze, pour réduire le frottement lors des déplacements verticaux de l'outil 10 dans le forage 12, pendant une opération de diagraphie.

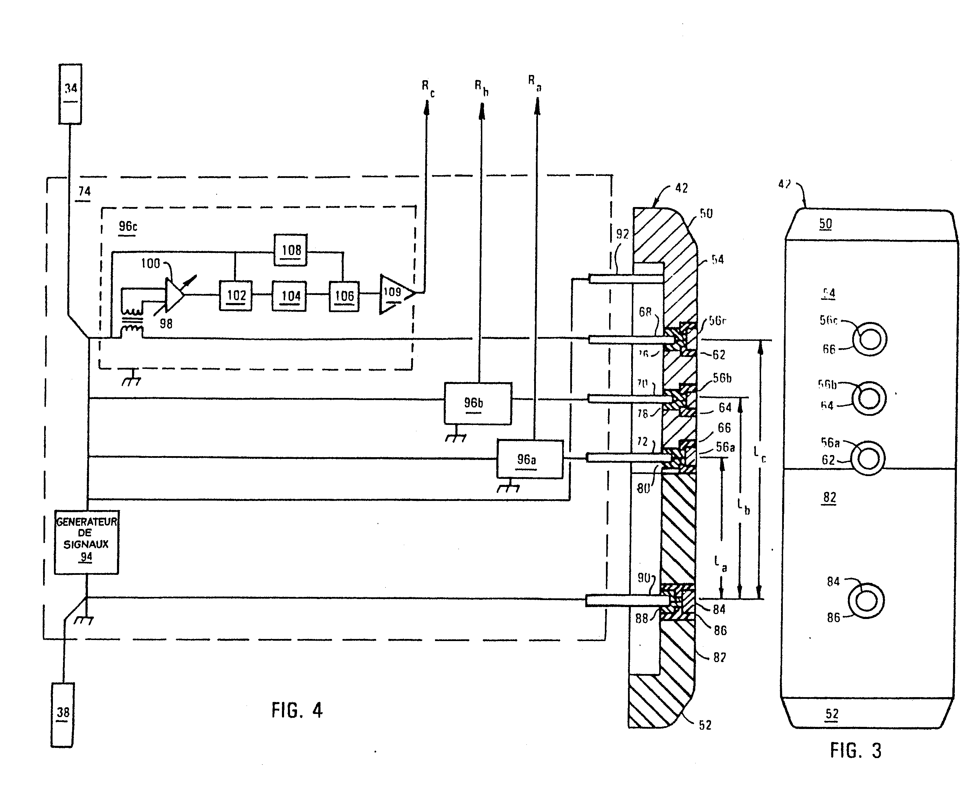

Un mode de réalisation pratique du patin 42 est représenté en détail dans la figure 3, qui montre une vue frontale du patin 42, et dans la figure 4, qui illustre une coupe transversale du patin 42 et les circuits électroniques qui y sont associés (représentés de façon schématique). Le patin 42 est allongé dans la direction du déplacement et sa surface est incurvée de façon à pouvoir s'adapter à la courbure de la paroi du forage 12. La partie supérieure 50 de la surface, qui est de forme conique, permet au patin 42 de se déplacer en contact avec la paroi du forage 12 au fur et à mesure que l'outil 10 parcourt le forage 12 vers la surface lors d'une opération de diagraphie.

Une partie supérieure 54 de la surface ainsi que le bord antérieur 50 du patin 42 jouent le rôle d'une électrode de focalisation de grande dimension. Les parties 50 et 54 de la surface du patin sont constituées d'un matériau non conducteur tel que le bronze ou l'acier doux, et sont reliées aux circuits électroniques 74 du patin par le câble 92. Dans la partie 54 de la surface sont disposées longitudinalement trois électrodes de courant 56a, 56b et 56c qui sont chacune montées de façon à affleurer à la surface de la partie 54 et qui sont portées et électriquement isolées de la partie 54 de la surface, par des supports isolants respectifs 62, 64 et 66. Les électrodes de courant 56a, 56b, et 56 c, qui peuvent être constituées d'acier inoxydable, sont noyées dans un matériau électriquement isolant comme par exemple de l'Araldite, comme indiqué en 76, 78 et 80. Les électrodes de courant 56a, 56b et 56c sont reliées aux circuits électroniques 74 du patin par des câbles électriques respectifs 68, 70, 72. Une partie inférieure 82 de la surface du patin 42 est constituée d'un matériau isolant tel que du caoutchouc dur ou une résine époxy. Au centre de la partie 82 de la surface, est disposée une électrodde de retour 84 maintenue par un support isolant 86 constitué d'un matériau céramique, et noyée dans un matériau isolant 88 tel que de l'Araldite. L'électrode de retour 84 est reliée à l'électronique 74 par le câble 90. Une partie inférieure 52 de la surface, de forme conique, constitue l'extrémité inférieure du patin 42 de l'outil 10 qui parcourt le forage 12 lors de l'opération de diagraphie.

Les dimensions types d'une sonde 32 sont les suivantes: les parties 34, 36 et 38 de la sonde mesurent respectivement longitudinalement 100 cm, 20 cm et 100 cm. La sonde 32 a un diamètre de 10 cm et se trouve normalement à une distance de 5 cm de la paroi du forage 12 dans le plan défini par les axes centraux de la sonde 32 et du patin 42. Les dimensions types d'un patin 42 sont les suivantes: les électrodes de courant 56a-56c et 84 ont un diamètre de 0,5 cm. Les électrodes de courant 56a-56c sont à des distances longitudinales de l'électrode de retour 84 de $L_a$ = 6,5 cm, $L_b$ = 9,5 cm et $L_c$ = 12,5 cm. Les dimensions longitudinales des parties de surface 54 et 50 sont de 13 cm et celles des parties de surface 82 et 52 sont de 13 cm. Pour un forage type de 20 cm, les parties de surface 54 et 82 ont un rayon caractéristique de 10,4 cm avec une extension latérale de ∓ 25°.

L'électronique appropriée au fonctionnement du patin 42 en association avec la sonde 32 est représentée globalement en 74 dans la figure 4. Le générateur de signaux 94 fournit le courant électrique au patin 42 et plus précisément, à la partie de surface 54 et aux électrodes de courant individuelles 56a, 56b et 56c, par l'intermédiaire des circuits de signaux de mesure respectifs 96a, 96b et 96c. Le courant revient au générateur de signaux 94 par l'intermédiaire de l'électrode de retour 84. La fréqence du courant délivré est de 1,010 Hz.

Le circuit pour signaux de mesure 96c est représenté en détail dans la figure 4, les circuits pour signaux de mesure 96b et 96c étant sensiblement identiques dans leur conception et représentés de manière générale par celui-ci. Le courant d'analyse provenant du générateur de signaux 94 est fourni à l'électrode de courant 56c par l'intermédiaire du transformateur d'entrée 98. Le transformateur 98 fournit le signal à un préamplificateur d'isolation à gain variable 100, dont le gain et les paramètres de démultiplication sont commandés depuis la surface. La sortie du préamplificateur d'isolation à gain variable 100 est délivrée à un détecteur de phase 102, qui reçoit également le signal généré par le générateur de signaux 94. Le détecteur de phase 102 mesure seulement la partie du signal de mesure qui est en phase avec le courant fourni par le générateur de signaux 94. La sortie du détecteur de phase 102 est envoyée au filtre passe-bas 104, qui intègre le signal et produit un signal dont l'amplitude est caractéristique de l'amplitude du signal de mesure détecté. Ce signal de mesure intégré est envoyé au circuit détecteur de rapport 106, qui reçoit également le signal provenant du générateur de signaux 94 ayant été intégré par l'intégrateur 108. La sortie du circuit détecteur de rapport 106, qui est représentative de la résisitivité apparente telle qu'elle est mesurée par les électrodes de courant 56c, est amplifiée dans l'amplificateur 108 et envoyée vers la surface en tant que signal $R_c$. Le transformateur d'entrée 98 et le préamplificateur 106 sont typiquement montés au dos du patin associé.

Le reste de l'électronique du circuit de mesure 96c peut être contenu dans la cartouche électronique de l'outil 10, dans la sonde 32 ou être monté au dos du patin 42.

Le courant provenant du générateur de signaux 94 est également appliqué à la partie 34 de la sonde pour améliorer la focalisation, comme cela est décrit ci-après. Le retour du courant vers le générateur de signaux 94 est représenté par une connexion à la partie 38 de la sonde, mais cette connexion peut être omise sans dégradation notable de la mesure.

Le principe de fonctionnement de la sonde 32 est illustré schématiquement dans la partie droite de la figure 2. Le courant émis par les électrodes de courant 56a-56c et par la partie 54 de la surface du patin venant au contact de la paroi et par la partie 50 de la surface cônique, pénètre dans la boue, dans le gâteau de boue et/ou dans la formation pour revenir au générateur de signaux 94 par l'intermédiaire de l'électrode de retour 84 et de la partie de sonde 38. Une répartition de densité de courant est établie sur la partie de surface 54 et, par conséquent, des lignes de courant provenant de diverses zones de la partie de surface 54 sont établies et dépendent de l'épaisseur et de la résistance du gâteau de boue, et de la zone envahie, ainsi que de la résistance de la formation proprement dite. Les électrodes de courant 56a, 56b et 56c sont avantageusement disposées dans des zones de la partie de surface 54 présentant des densités de courant s'affaiblissant progressivement et associées à des profondeurs d'investigation croissant progressivement. Alors que les électrodes de courant 56a, 56b et 56c sont disposées à des intervalles réguliers le long de l'axe central longitudinal de la partie de surface 54, il n'est pas nécessaire de remplir toutes ces conditions, comme décrit ci-dessous. Les courants émis par les électrodes de courant 56a-56c sont mesurés et renvoyés vers la surface en tant que résistances respectives $R_a$, $R_b$ et $R_c$. Les courants provenant des électrodes de courant 56a-56c sont focalisés par le courant émis par les parties de surface 50 et 54 et également par la partie de sonde 34 qui contraint essentiellement les courants d'analyse à rester dans un plan passant par les axes centraux de la sonde 32 et du patin 42. Cet arrangement particulier minimise avantageusement l'élargissement du faisceau et améliore la focalisation des courants d'analyse. La focalisation est encore meilleure lorsqu'on maintient le corps de sonde 32 à une faible distance, sensiblement constante, du patin 42 par excentrage de la sonde 32, comme cela est représenté.

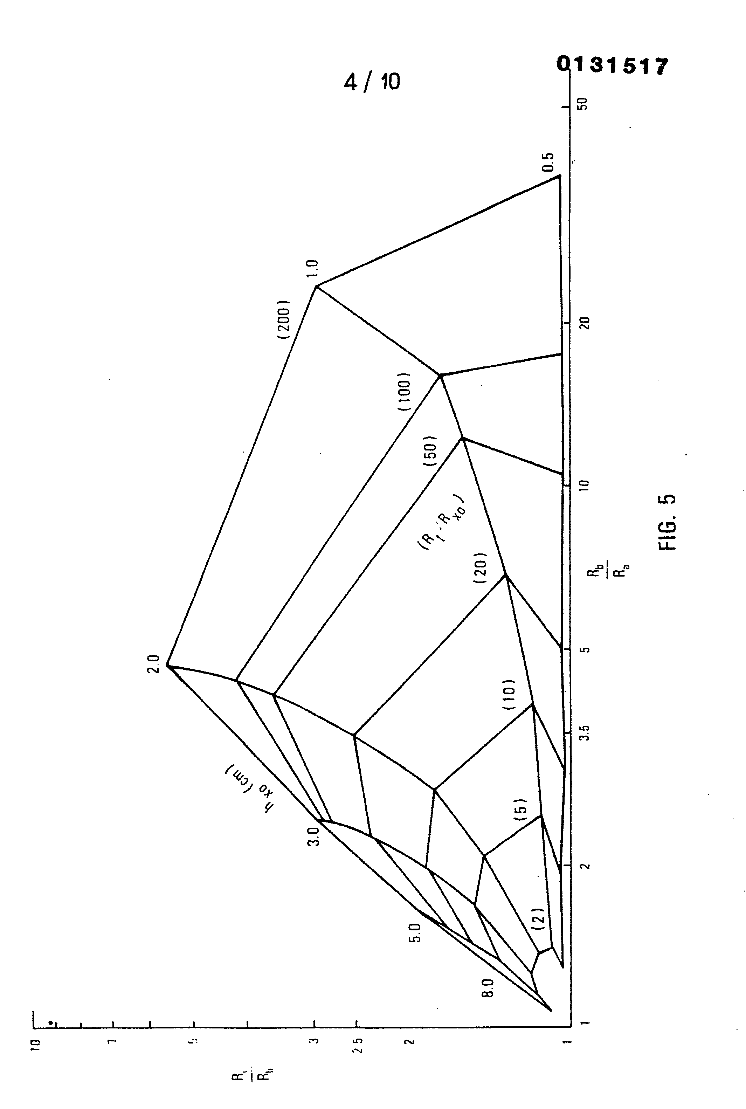

Une solution graphique donnant la valeur de $R_{XO}$ est illustrée dans la figure 5, qui représente un graphique en "spirale" ayant pour abscisse le rapport $R_b/R_a$ et pour ordonnées le rapport $R_c/R_b$. L'intersection des valeurs respectives de ces deux rapports donne les valeurs de $h_{XO}$ (épaisseur radiale du gâteau de boue) et de $R_t/R_{XO}$. Les valeurs de $R_t/R_{XO}$ sont représentées entre parenthèses dans la figure 5 et varient de gauche à droite entre 2 et 200. Les valeurs de $h_{XO}$ varient de droite à gauche entre 0,5 et 8,0. A titre d'exemple, lorsque la sonde 32 indique un rapport $R_b/R_a$ de 3,5 et un rapport $R_c/R_b$ de 2,5, l'abaque de la figure 5 fournit une épaisseur de gâteau de boue de 2,0 cm et un rapport $R_t/R_{XO}$ de 20. Si la résistivité profonde apparente est connue, par exemple par une mesure effectuée à l'aide de l'appareil électrique à focalisation profonde décrit dans le brevet US No. 3 772 589 (Scholberg, 13 novembre 1973) ou par un autre outil électrique ou à induction appropriée, la valeur approximative de $R_{XO}$ est obtenue facilement. On peut par la suite déterminer par itération les valeurs précises de $R_{XO}$ et $R_t$.

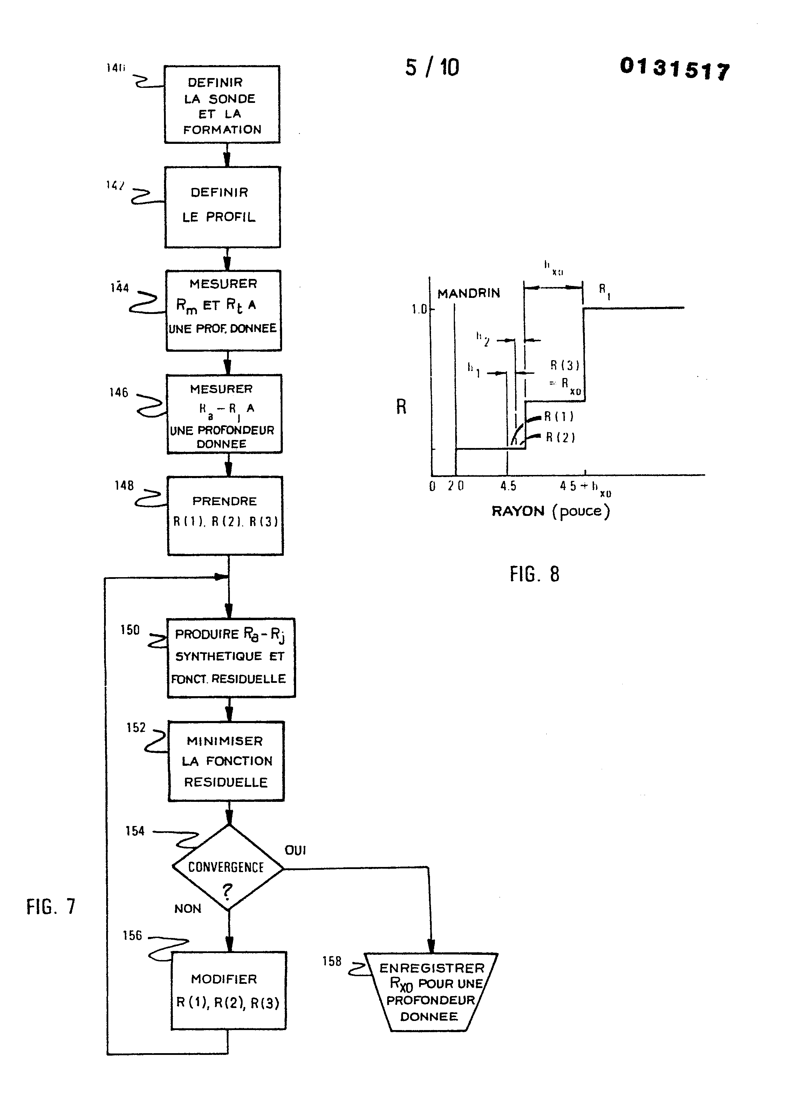

Un processus analogue à celui décrit ci-dessus pour élaborer et utiliser l'abaque de la figure 5, peut être réalisé sous forme d'un processus de consultation automatique d'un tableau incorporé au calculateur 26 de la figure 2. Le calculateur 26 peut par exemple être constitué par n'importe quel calculateur numérique non spécialisé approprié. Un organigramme simplifié permettant de programmer le calculateur 26 de façon à créer, stocker et utiliser un tableau de consultation approprié est illustré dans la figure 6.

L'étape initiale 110 consiste de façon appropriée à définir le problème, c'est-à-dire à définir la sonde et la formation. La sonde 32 est conçue en tant que dispositif à basse fréquence. Sa représentation mathématique est un problème de valeur aux limites relevant de la théorie des potentiels, et un type de problème mathématique classique. La sonde 32 est conçue sous forme d'un mandrin supposé centré sur l'axe de rotation d'un système de coordonnées cylindriques. Axialement, le milieu de la sonde est isolant (partie 36) alors que les extrémités adjacentes (parties 34 et 38) sont conductrices. La sonde 32 est entourée de fluide de forage, c'est-à-dire de boue de forage qui elle-même est entourée de couches concentriques de gâteau de boue, d'une zone envahie et d'une formation non perturbée. Le corps de la sonde 32 a un rayon de 5 cm, les parties de sonde 34 et 38 ont chacune une longueur de 100 cm et la partie de sonde 36 a une longueur de 20 cm. Le patin 42 est conçu de façon à présenter une partie médiane isolante et des extrémités conductrices. Le patin 42 est appliqué contre la paroi du forage 12. La sonde 32 et la patin 42 sont disposés symétriquement par rapport à un plan horizontal perpendiculaire à la sonde 32 et passant par le milieu de la sonde 32 et du patin 42. On choisit une longueur de patin 42 de 2 cm. Les surfaces conductrices du patin 42 comportent des électrodes de 0,5 cm de largeur et espacées de 3 cm, les électrodes auxquelles on s'intéresse étant les trois électrodes de chaque surface conductrice les plus proches de la partie isolante. Les parties supérieure 34 et inférieure 38 de la sonde sont électriquement reliées aux parties supérieure et inférieure du patin 42. Cela définit un arrangement satisfaisant illustrant une situation où, soit la partie inférieure du patin ou la partie inférieure de la sonde 38 jouent le rôle du retour de courant, soit le retour de courant allongé est concentré dans l'électrode unique de courant de retour.

Au stade 112, on choisit un ensemble de valeurs de $h_{mc}$, $h_{XO}$, $R_{mc}$, $R_{XO}$ et $R_t$ et on détermine au stade 114 les rapports synthétiques $R_b/R_a$ et $R_c/R_b$ en utilisant la méthode des éléments finis, qui est une technique numérique bien connue, pour résoudre le problème de la valeur aux limites. Les valeurs de $h_{XO}$ et de $R_t/R_{XO}$ sont stockées en mémoire au stade 116 en fonction des rapports synthétiques $R_b/R_a$ et $R_c/R_b$. Au stade 118, on effectue une vérification pour déterminer si un nombre suffisant de valeurs de h et de R ont été déterminées pour permettre la création d'un abaque ayant la résolution souhaitée. Si cela n'est pas le cas, on choisit au stade 112 un ensemble discret de valeurs de $h_{mc}$, $h_{XO}$, $R_c$ et $R_t$ et on exécute de nouveau les opérations 114, 116 et 118. Si un nombre suffisant de valeurs a été sélectionné, on considère que le tableau de consultation est complet. On effectue alors au stade 120 et 122 une mesure de $R_t$ (résistivité de la formation non envahie mesurée par un outil d'investigation en profondeur) et les mesures de $R_a$, $R_b$ et $R_c$. Le calculateur 26 établit au stade 124 les rapports $R_b/R_a$ et $R_c/R_b$ et consulte le tableau de consultation pour trouver les valeurs correspondantes de $h_{XO}$ et $R_t/R_{XO}$, au stade 126. Si ces valeurs ne peuvent être obtenues de façon exacte, le calculateur 26 effectue une interpolation pour déterminer les valeurs de $h_{XO}$ et de $R_t/R_{XO}$. Une fois qu'une valeur de $R_t/R_{XO}$ est obtenue celle de $R_{XO}$ est déterminée sans difficulté au stade 128.

L'invention concerne également l'utilisation de plus de trois électrodes de courant pour fournir soit une mesure plus précise de $R_{XO}$, soit un profil de résistivité de l'invasion. Un appareil utilisable à cette fin serait tout à fait analogue à celui représenté dans les figures 2 et 3, à l'exception du fait que les électrodes de courant supplémentaires seraient installées sur le patin 42.

Un autre mode de traitement des signaux de mesure provenant des électrodes de courant est représenté dans la figure 7, où le calculateur 26 pourrait être programmé de la manière suivante. Une sonde et une configuration de formation sont définies à l'étape 140. La configuration est telle que définie dans la figure 2 et le texte qui y est associé, à l'exception du fait que l'on suppose qu'il y a 10 électrodes. Les électrodes ont toutes une largeur de 0,5 cm et sont espacées de 0,16 cm. La longueur hors tout de la partie émettrice du patin est de 19,48 cm. La séparation entre l'électroe de retour et l'élecrode émettrice la plus proche est de 10,16 cm. Le mandrin, de 10,16 cm de diamètre a une longueur de 162 cm et comporte une partie isolée de 56 cm de long.

A titre d'illustration, on décrit un problème simplifié avec contraste moyen. Le profil de résistivité, qui est défini au state 142 est supposé être échelonné, de la façon représentée dans la figure 8. La résisitivité $R_m$ du forage et la résistivité exacte de la formation $R_t$ sont mesurées avec d'autres dispositifs. Trois anneaux concentriques d'épaisseurs supposées $h_1$ et $h_2$ et $R_{X0}$ mais de résistivités inconnues R(1), R(2) et R(3) qui sont les variables indépendantes, sont définis. Les deux premiers anneaux représentent soit un gâteau de boue de 2 épaisseurs, soit, en variante, un écart par rapport à la paroi et le gâteau de boue. La troisième couche représente une zone envahie, dont l'épaisseur est la profondeur d'investigation connue pour un outil particulier. Ce problème est représentatif d'une situation pratique où l'on doit trouver le $R_{X0}$ correspondant à un outil particulier, lorsque l'écart ou le gâteau de boue varient. On peut si on la souhaite définir un modèle plus complexe représentant un profil de résisitivité détaillé de la zone envahie.

$R_t$ et $R_m$ sont mesurés au stade 144 par des instruments connus tels qu'un appareil électrique d'investigation en profondeur décrit dans le brevet de Scholberg mentionné ci-dessus et un dispositif de mesure de la résistivité de la boue, pour établir la valeur de certains paramètres mentionnés ci-dessus.

L'outil 10 effectue au stade 146 une mesure de 10 résistivités apparentes $R_a$ - $R_j$ à une profondeur donnée. Des valeurs initiales de R(1), R(2) et R(3) sont estimées au stade 148. Sur la base de ces valeurs supposées, les valeurs synthétiques de $R_a$ - $R_j$ sont calculées en utilisant un code d'éléments finis à deux dimensions, dont plusieurs versions appropriées sont disponibles dans le commerce. En outre, une fonction résiduelle est produite sur la base de ces estimations au stade 150. La fonction résiduelle est un vecteur calculé en prenant la différence, électrode par électrode, entre les courants mesurés $R_a$ - $R_j$ et les courants synthétiques $R_a$ - $R_j$.

La fonction résiduelle produite au stade 150 est minimisée au stade 152 par application de l'algorithme de Levenberg-Marquardt, qui est un procédé bien connu pour minimiser une fonction de plusieurs variables indépendantes. L'algorithme utilise les différences finies pour déterminer les variations des estimateurs en vue de l'itération suivante et de la minimisation suivante de la fonction résiduelle. Un test de convergence est effectué au stade 154. Si l'algorithme n'a pas convergé, les estimateurs de R(1), R(2) et R(3) sont modifiés selon le stade 152, et on revient au stade 150 pour produire de nouveaux $R_a - R_j$ synthétiques et une nouvelle fonction résiduelle. Les opérations 150, 152, 154 et 156 sont exécutées de façon itérative jusqu'à convergence, auquel cas on passe au stade 158 qui enregistre la valeur de $R_{XO}$, et si on le souhaite de R(1) et R(2) pour la profondeur donnée.

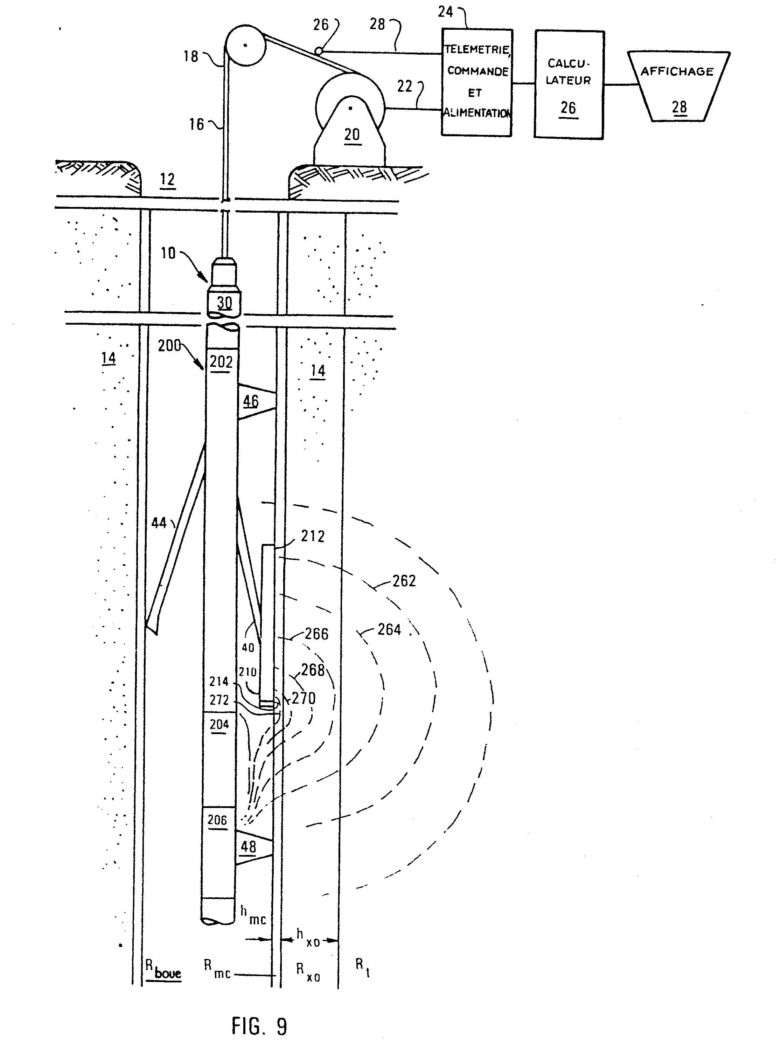

La figure 9 représente un autre mode de réalisation de l'invention qui augmente sensiblement le rapport entre la profondeur d'investigation et la longueur du patin. On obtient une profondeur d'investigation satisfaisante avec un patin court qui peut être appliqué facilement et de façon fiable sur la paroi d'un forage. Une sonde indiquée globalement en 200 fournit des signaux de mesure selon la présente invention. La sonde 200 comprend trois parties allongées longitudinalement adjacentes 202, 204 et 206. Les parties 202 et 206 sont constituées d'un matériau électriquement conducteur tel que de l'acier inoxydable. La partie 204, qui est placée entre les parties de sonde conductrices 202 et 206 joue le rôle d'isolant. Un arrangement approprié est examiné ci-dessus dans le contexte de la partie de sonde 36. La partie 202 porte un bras 40 auquel un patin 210 est fixé, ainsi qu'un contre-bras 44. Le contre-bras 44 et le bras 40 coopèrent de préférence de façon à excentrer la sonde 200 dans le forage 12. Le patin 210 comporte une partie de surface de focalisation 212 et une partie isolante 214, comme cela est expliqué en détail ci-dessous. Deux éléments de frottement 46 et 48 sont prévus, comme décrit précédemment.

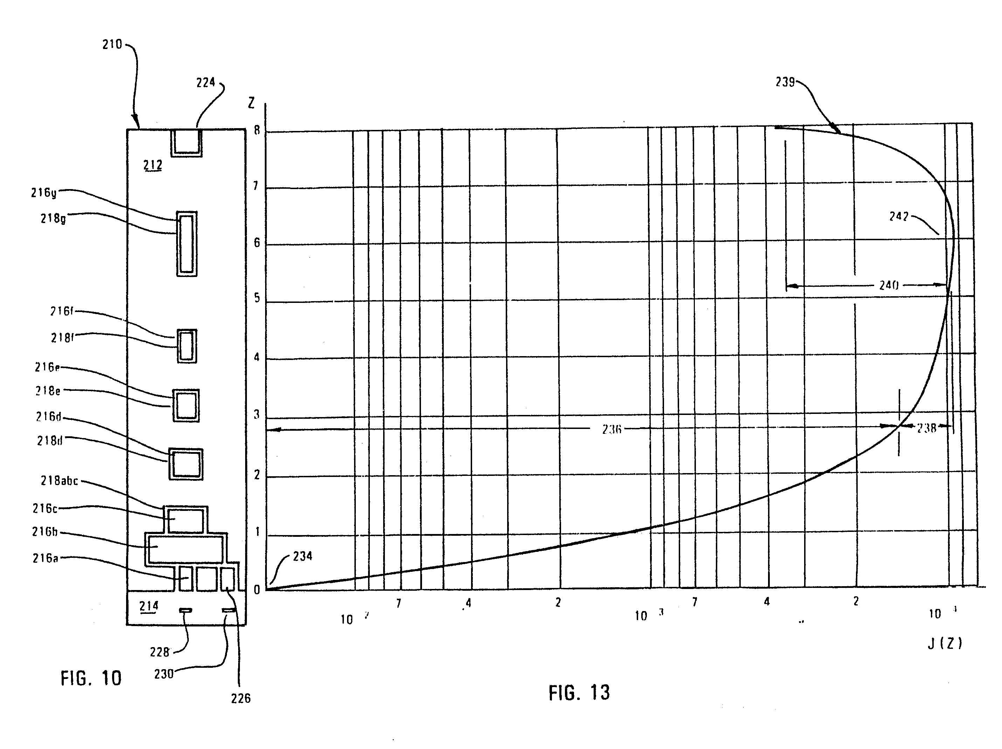

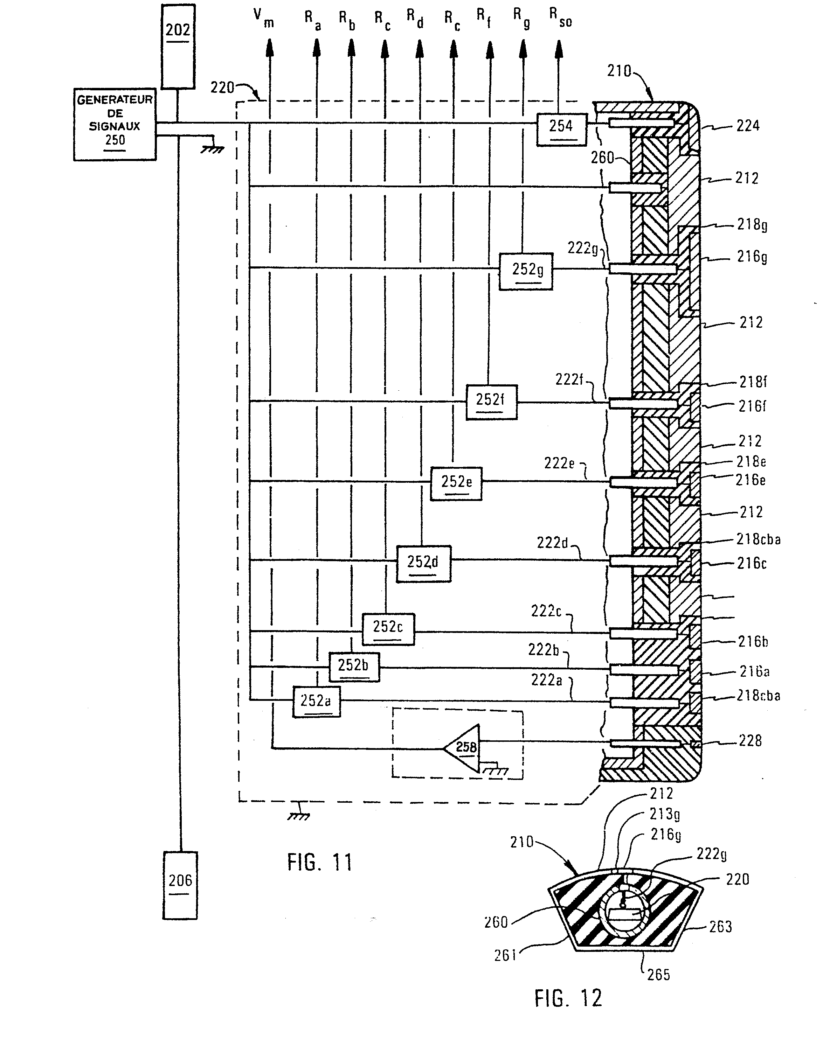

Un mode de réalisation particulièrement avantageux du patin est représenté en détail dans la figure 10, qui montre une vue frontale du patin 210, et dans les figures 11 et 12, qui montrent des coupes transversales du patin 210 et l'électronique associée (représentée schématiquement dans la figure 11 et indiquée globalement en 220). Le patin 210 peut comporter des parties côniques, comme décrit précédemment, et est allongé dans la direction du mouvement. La surface métallique 212 du patin 210 est incurvée de façon à s'adapter à la courbure de la paroi du forage 12. A l'intérieur de la partie de surface de focalisation 212, sont placées longitudinalement sept électrodes de courant 216a-216g qui sont montées de façon à affleurer à la surface de la partie de surface 212 et qui sont portées et électriquement isolées de la partie de surface 212 par des éléments céramiques respectifs 218abc et 218d-g. Les électrodes de courant 216a-216g sont reliées à l'électronique du patin 220 par des câbles respectifs 222a-222g. La partie de surface 212 comporte deux électrodes de courant supplémentaires 224 et 226 et la partie de surface 214 contient deux électrodes de tension 228 et 230. Le but de ces électrodes est décrit ci-après.

Les dimensions types de la sonde 200 sont les suivantes. Les parties de sonde 202, 204 et 206 mesurent respectivement longitudinalement 76,20 cm, 38,1 cm et 38,1 cm. La sonde 200 a un diamètre de 10,16 cm et présente un écart nominal par rapport à la paroi du forage 12 de 1,8 cm dans le plan défini par les axes centraux de la sonde 200 et du patin 210. Les dimensions types du patin 210 sont les suivantes: les longueurs des parties de surface 212 et 214 sont respectivement de 20,3 cm et de 1,5 cm. Pour un sondage type de 20,3 cm, les parties de surface 212 et 214 ont des rayons caractéristiques de 11,4 cm avec une extension latérale de $\mp$ 25°.

Le patin 210 est de préférence maintenu dans une position longitudinale sensiblement fixe par rapport aux parties 202, 204 et 206 de la sonde 200. Une focalisation optimale est obtenue si le bord de la partie isolante 214 du patin le plus proche de la partie de sonde 206, se trouve dans un plan coupant transversalement la partie de sonde 202 à environ 2 cm de la jonction entre les parties de sonde 202 et 204, bien que cette distance ne soit pas déterminante. Une distance de 1 cm a été choisie pour le mode de réalisation de la figure 9.

L'arrangement décrit fournit des lignes de courant ayant une profondeur de pénétration allant de quelque millimètres à environ 20 cm. Cela est obtenu malgré la faible longueur du patin 210, qui est d'environ 20 cm. En outre, le patin 210 est très résistant à l'usure du fait que sa surface de contact avec la paroi est essentiellement constituée de métal.

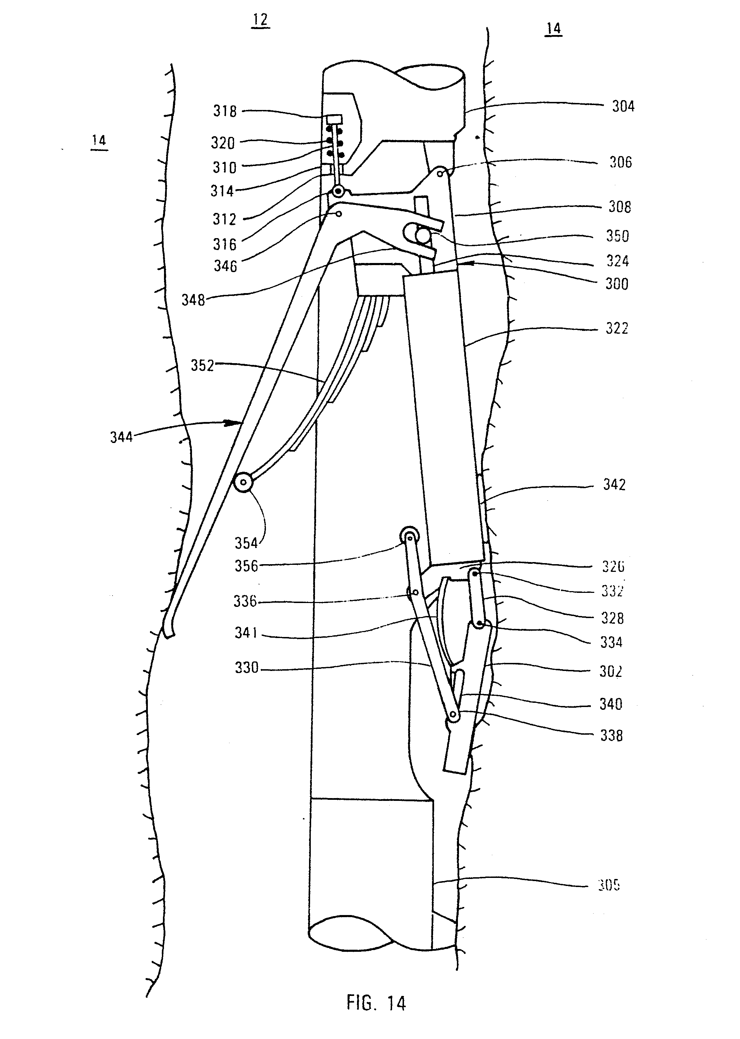

Les dimensions et l'agencement des électrodes de courant 216a-216g sont adaptés à la répartition de densité de courant sur la partie de surface 212, qui elle-même est liée à la profondeur d'investigation des courants d'analyse émis par les électrodes de courant 216a-216g. La courbe 239 représentée dans la figure 13 en association avec le patin 210 illustre la répartition de la densité de courant $J(z)$. Les abscisses représentent en échelle logarithmique la densité de courant $J(z)$ et les ordonnées représentent la position longitudinale $z$ sur la partie de surface 212. Le graphique de la figure 13, qui est donné à titre d'exemple, est basé sur $R_{XO}/R_{mc} = 100$ et $h_{mc} = 1,27$ cm.

La profondeur d'investigation du courant augmente lorsque la densité de courant diminue. La profondeur d'investigation est minimale à l'extrémité inférieure de la partie de surface 212, indiquée dans la figure 13 en 234. On peut remarquer qu'en partant du minimum 234, la profondeur d'investigation subit un rapide accroissement, indiqué globalement en 236, lorsque la partie de sonde 202 et que la partie de surface 212 commencent à focaliser de façon efficace le courant le long de l'axe longitudinal du patin 210. Un accroissement moins rapide est observé jusqu'à ce qu'un maximum 242 situé dans le tiers supérieur du patin soit atteint, comme cela est indiqué globalement en 238. Au delà du maximum 242, la proximité du bord supérieur 31 provoque une augmentation de la densité du courant et par conséquent, une diminution de la profondeur d'investigation, comme cela est indiqué globalement en 240.

Les sept électrodes de courant 216a-216g sont disposées de façon à fournir des mesures de résistivité à différentes profondeurs d'investigation. La première électrode 216a est adjacente à la partie isolante 21. La seconde électrode de courant 216b est séparée de la première électrode de courant 216a par une portion de l'élément isolant 218abc, et la troisième électrode de courant 216c est séparée de la seconde électrode de courant 216b par une autre portion de l'élément isolant 218abc. La disposition dense des électrodes de courant 216a-216c est adaptée à la variation rapide de la profondeur d'investigation dans la partie 236 de la courbe 239. Les trois électrodes de courant 216d-216f sont séparées par des intervalles plus grands de façon à tenir compte de la variation relativement plus lente dans la partie 238 de la courbe 239. Dans la partie 240 de la courbe 239 comprenant le maximum 242, qui correspond pratiquement au tiers supérieur de la partie de surface 212, la variation à proximité du maximum 242 est faible et une seule électrode de courant, à savoir l'électrode 216g, suffit.

Comme le montre la figure 10, les électrodes de courant 216b-216g présentent des caractéristiques individuelles qui sont définies de façon à optimiser le rapport signal/bruit des mesures respectives. Plus précisément, les longueurs et largeurs des électrodes de courant respectives 216a-216g sont choisies de manière à maintenir une surface utile optimale et maximiser le rapport signal/bruit des mesures respectives. Les caractéristiques respectives des électrodes 216a-216g sont fondées sur la variation longitudinale de la densité de courant le long de la partie de surface 212, comme l'illustre la courbe J(z), et la variation latérale de la densité de courant à travers la partie de surface 212. Le long de l'axe longitudinal de la partie de surface 212, où la densité de courant est élevée, celle-ci reste également stable sur une grande partie de la largeur du patin et n'augmente significativement qu'à proximité des bords latéraux. Cependant, dans les positions où la densité de courant est faible, la surface adjacente à l'axe longitudinal de la partie de surface 212 sur laquelle la densité de courant reste sensiblement stable, est relativement étroite. La largeur de chacune des électrodes de courant 216a-216g est définie de façon à ce que la variation latérale de la densité de courant depuis le centre de l'électrode (c'est-à-dire, de la partie de surface 21) jusqu'aux extrémités latérales de l'électrode, soit maintenue dans une plage donnée, par exemple égale à 15%. Comme la densité de courant diminue lorsque la distance augmente par rapport à la partie isolante 214, les électrodes de courant 216b-216g ont des largeurs respectives qui décroissent lorsque la distance augmente à partir de la partie isolante 214. L'électrode de courant 216a ne respecte pas cette règle de conception pour des raisons décrites plus loin. Par conséquent, l'électrode de courant 216b adjacente à l'électrode de courant 216a présente la largeur la plus importante, égale à plus de la moitié de la largeur de la partie de surface 212. L'électrode de courant 216c, adjacente à l'électrode de courant 216b, présente une largeur beaucoup plus faible, d'environ la moitié de celle de l'électrode de courant 216b. L'électrode de courant 216d est plus étroite que l'électrode de courant 216c et ainsi de suite, jusqu'à l'électrode 216g, qui est la plus étroite. Les longueurs des électrodes de courant 216a-216g sont avantageusement sélectionnées de façon à être aussi grandes que possible, mais sont limitées par le fait qu'il est nécessaire que la variation de la densité de courant pour chaque électrode entre l'une de ces extrémités longitudinales et l'autre, soit inférieure à une valeur donnée, par exemple, inférieure à 15%. Compte tenu de ce qui a été mentionné ci-dessus, le mode d'évolution de la longueur des électrodes de courant 216b-216g est de préférence l'opposé du mode défini pour la largeur. L'électrode de courant 216b est la plus courte, et la longeur de l'électrode augmente jusqu'à l'électrode de courant 216g qui est la plus longue.

L'électrode de courant 224 adjacente au bord supérieur de la partie de surface 212 est située dans une zone de densité de courant relativement importante et fournit une mesure correspondant à une profondeur d'investigation inférieure au maximum 242. La mesure effectuée avec l'électrode de courant 224 est sensible au contact du patin avec la paroi du forage 12 dans la zone du bord supérieur du patin 210. Lorsque le patin 210 est écarté de la paroi du forage 12, le courant doit traverser la boue de forage, provoquant une variation significative de la résistivité apparente mesurée par l'électrode de courant 224. La mesure fournie par l'électrode de courant 224 permet ainsi de contrôler le contact du patin 210 avec la paroi du forage 12.

L'électrode de courant 216a ne satisfait pas la règle de conception décrite pour les électrodes de courant 216b-216g. Alors que l'électrode de courant 216a peut avantageusement présenter une largeur pratiquement égale à celle de la partie de surface 212, conformément à la règle de conception utilisée, la zone de la partie de surface peut avantageusement être utilisée pour déceler un mauvais contact du patin et fournir une mesure lorsque le forage se trouve dans des conditions défavorables. En conséquence, l'électrode de courant 226 est pourvue latéralement d'une électrode de courant 216a dont la largeur est faible de façon à recevoir l'électrode de courant 226. L'électrode de courant latérale 226 fournit une mesure indiquant la résistivité à une très faible profondeur, de l'ordre de quelques millimètres, qui est pratiquement identique à la mesure fournie par l'électrode de courant 216a. On notera que la densité de courant dans la région de la partie de surface 212 dans laquelle les électrodes de courant 216a et 226 sont disposées, reste stable sur la quasi-totalité de la largeur du patin. En conséquence, les électrodes de courant 216a et 226 doivent fournir, lorsque le forage se trouve dans des conditions satisfaisantes, des mesures tout à fait semblables, bien que les mesures respectives à très faible profondeur, soient extrêmement sensibles au contact de la partie de surface 212 avec la paroi de forage 12. Si l'une des électrodes de courant 216a ou 226 n'est pas en contact avec la paroi du forage 12, la mesure fournie par l'électrode qui se trouve écartée de la paroi sera dominée par la résisitivité $R_m$ de la boue, qui est normalement beaucoup plus faible que celle du gâteau de boue et de la zone envahie. Cependant, dans certaines circonstances, l'une des électrodes de courant 216a et 226 reste en contact avec la paroi du forage 12, comme par exemple lorsque la courbure de la partie de surface 212 ne correspond pas à celle de la paroi du forage 12. A titre d'exemple, si la courbure de la paroi du forage 12 est plus grande que celle de la partie de surface 212, la zone centrale de la partie de surface 212 n'entrera pas en contact avec la paroi. Dans ces circonstances, l'électrode de courant latérale 226 sera au contact de la paroi du forage 12 et une mesure satisfaisante sera obtenue malgré la mauvaise qualité de la mesure effectuée par l'électrode de courant centrale 216a. En outre, une différence significative entre les mesures respectives des électrodes de courant 216a et 226 indiquera un contact imparfait. La comparaison entre ces deux mesures permettra de vérifier l'application circonférentielle du patin 210 sur la paroi du forage 12.

La faible largeur des électrodes de courant 216a et 226 ne dégrade pas le rapport signal/bruit des signaux de mesure obtenus à partir de celles-ci, car la densité de courant est très importante dans la zone inférieure de la partie de surface 212. Des électrodes latérales supplémentaires pourraient être prévues dans d'autres zones de la partie de surface 212 où la densité de courant est élevée. A titre d'exemple, on pourrait placer une seconde électrode de courant latérale au niveau de l'électrode de courant 216b et une troisième électrode de courant latérale au niveau de l'électrode de courant 216c.

Afin de diminuer l'influence de la résistivité de la boue sur les mesures fournies par les électrodes de courant 216a et 226, des électrodes de mesure de tension 228 et 230 sont disposées dans la partie de surface isolante 214 et respectivement associées aux électrodes de courant 216a et 226. Les électrodes 228 et 230 sont respetivement alignées dans la direction longitudinale du patin 210, avec les électrodes de courant 216a et 226 et se trouvent dans le centre latéral de la partie de surface isolant 214.

Les électrodes de tension 228 et 230 fournissent des mesures de tension respectives qui permettent d'effectuer une correction pour tenir compte de l'influence de la boue. Soit $I_a$ le courant émis par l'électrode de courant 216a et V la tension appliquée à la partie de surface 212 et si l'on considère les électrodes de courant 216a-216g, 224 et 226, la mesure de résistivité apparente fournie par l'électrode 216a est:

$$R_a = k_a \, (V/I_a) \; ; \hspace{3cm} (1)$$

$k_a$ étant un coefficient constant. La correction tenant compte de la boue consiste à remplacer cette expression par la suivante:

$$R_a{}^* = k_a \, (V - V_m) \, / \, I_a \hspace{3cm} (2)$$

où $V_m$ est la mesure de tension effectuée par l'électrode de tension 228. La correction est effectuée au moins pour des mesures à très faible profondeur par les électrodes de courant 216a et 226. On peut si on le souhaite, effectuer la correction pour les mesures obtenues à partir d'autres électrodes de courant.

- 25 -                    0131517

L'électronique appropriée au fonctionnement du patin 210 en association avec la sonde 200, est représentée globalement en 220 sur la figure 11. Un générateur de signaux 250, ayant des caractéristiques identiques à celles du générateur de signaux 94, fournit un courant électrique à la partie de surface 212 et aux électrodes de courant individuelles 216a-216g, 224 et 226 (non représentées) par l'intermédiaire de circuits pour signaux de mesure respectifs 252a-252g 254 et 256 (non représentés). Chacun des circuits pour signaux de mesure 252a-252g, 254 et 256 est pratiquement identique au circuit pour signaux de mesure 96c représenté dans la figure 4, le transformateur d'entrée associé et le préamplificateur étant de préférence montés à l'intérieur d'un tube métallique résistant à la pression 260 contenu à l'intérieur du corps du patin 210 (figure 12). Le patin 210 présente de façon appropriée des bords latéraux en métal conducteur 261 et 263 et un dos métallique conducteur 265, qui minimisent l'influence de la variation de distance entre la sonde 200 et le patin 210. Le volume situé à l'intérieur du corps du patin 210 peut être rempli par du caoutchouc dur, une résine époxy ou de l'huile. Le courant revient au générateur de signaux 250 par l'intermédiaire de la partie de sonde 206. Un courant de focalisation supplémentaire est fourni à la partie de sonde 202 et son retour s'effectue également par l'intermédiaire de la partie de sonde 206. L'électrode de tension 228 est reliée au préamplificateur 258 qui fournit la valeur du paramètre $V_m$. L'électrode de tension 260 et l'électronique qui y est associée seraient identiques, mais ne sont pas représentés pour plus de clarté.

Le principe de fonctionnement de la sonde 200 est illustré schématiquement dans la partie droite de la figure 9. Bien que tout à fait semblable en principe à la sonde 32 (figure 2), la sonde 200 possède une profondeur d'investigation plus importante. Les trajets de courant 262 et 264 partant de la zone supérieure de la partie de surface 212, sont fortement focalisés et pénètrent profondément dans la formation en traversant en grande partie la zone envahie. La focalisation est modérée dans la zone centrale de la partie de surface 212, comme l'indiquent les trajets de courant 266, 268 et 270. Le courant provenant de la zone inférieure de la partie de surface 212 est très faiblement focalisé et possède une très faible pénétration, comme le montre le trajet de courant 272. L'ensemble des mesures de résistivité apparente fournies par les électrodes de courant 216a-216g et 226, corrigées par les mesures obtenues par les électrodes de tension 228 et 230, sont traitées dans le calculateur 26 de la façon décrite ci-dessus, en vue de déterminer $R_{XO}$ ou un profil de résistivité, selon le cas souhaité.

### Mécanisme de bras

De préférence, les positions longitudinales de la sonde 32 et du patin 42, ainsi que de la sonde 200 et du patin 210 doivent être maintenues constantes les unes par rapport aux autres. Un mécanisme de bras particulièrement approprié aux divers modes de réalisation de sonde décrits ici est représenté dans les figures 14-16. Le mécanisme de bras, qui peut être monté dans une partie relativement courte du corps d'une sonde, tout en assurant la stabilité et l'excentrage souhaités grâce à un bras de support de patin de grande longueur, convient également généralement à une utilisation dans d'autres types de sondes excentrées.

L'agencement du mécanisme de bras dans le mode d'extension du patin est représenté dans la figure 14. Le bras 300 à l'extrémité duquel est monté le patin 302, qui peut par exemple être le patin 42 ou 210, est articulé sur la partie supérieure 304 du corps de sonde par un pivot 306. Le bras 300 comporte un prolongement intégral 308 du côté opposé au patin 302. Ce prolongement 308 est relié de façon élastique à la partie supérieure 304 du corps de sonde par une tige 310 qui traverse un trou 312 formé dans une partie de paroi 314 solidaire de la partie du corps de sonde 304. La tige 310 comporte à une extrémité un pivot 316 et peut ainsi pivoter par rapport au bras 300. A son autre extrémité, la tige 310 porte un collier de butée 318 sur lequel prend appui un ressort de compression 320, dont l'autre extrémité est en butée sur la partie de paroi 314 solidaire de la partie de corps supérieure 304.

Le bras 300 est essentiellement constitué par le corps 322 d'un dispositif d'actionnement à simple effet commandé par les appareils de surface. Le dispositif d'actionnement peut fonctionner de façon à déplacer une tige d'actionnement 324 partant du dispositif d'actionnement, à proximité du pivot 306. Le dispositif d'actionnement peut être un vérin hydraulique ou électrique à simple effet, la tige 324 étant fixée à l'élément mobile du vérin. De tels dispositifs sont bien connus.

Le patin 302 est relié à une pièce d'extrémité 326 solidaire du corps 322 du dispositif d'actionnement par deux biellettes 328 et 330. La biellette supérieure 328 est articulée par un pivot 332 sur la pièce d'extrémité 326 et par un pivot 334 sur l'extrémité supérieure du patin 302. La biellette inférieure 330 est articulée par un pivot 336 sur la pièce d'extrémité 326 et son extrémité 338 peut coulisser dans une fente allongée 340 ménagée à l'arrière du patin 300. Un ressort à lame 341 est fixé sur la pièce d'extrémité 326 et est relié au patin en un point situé approximativement au milieu de l'arrière du patin 302. Le ressort 341 exerce une force élastique qui tend à appliquer le patin 302 contre la paroi du forage 12. Comme l'extrémité de la biellette 330 peut coulisser par rapport au patin 302, celui-ci est autorisé à pivoter de façon limitée autour du pivot 334 et ainsi, à s'écarter angulairement de l'axe du corps de sonde, de manière à s'adapter au mieux à la forme de la paroi du forage 12. Par ailleurs, le corps du dispositif d'actionnement 322 porte du côté extérieur un élément 342 formant saillie, destiné au contact avec la paroi du forage 12.

Le contre-bras 344 est monté pivotant sur le prolongement 308 du bras 300 par un pivot 346 et se prolonge au-delà du pivot 346 par une fourche 348 coulissant sur un téton 350 fixé sur la tige d'actionnement 324. Un ressort à lames 352 fixé sur le prolongement 308 du bras 300 se termine par un galet 354 qui peut rouler sur la surface intérieure du contre-bras 344, le contre-bras 344 étant de ce fait sollicité élastiquement pour s'écarter du corps de sonde.

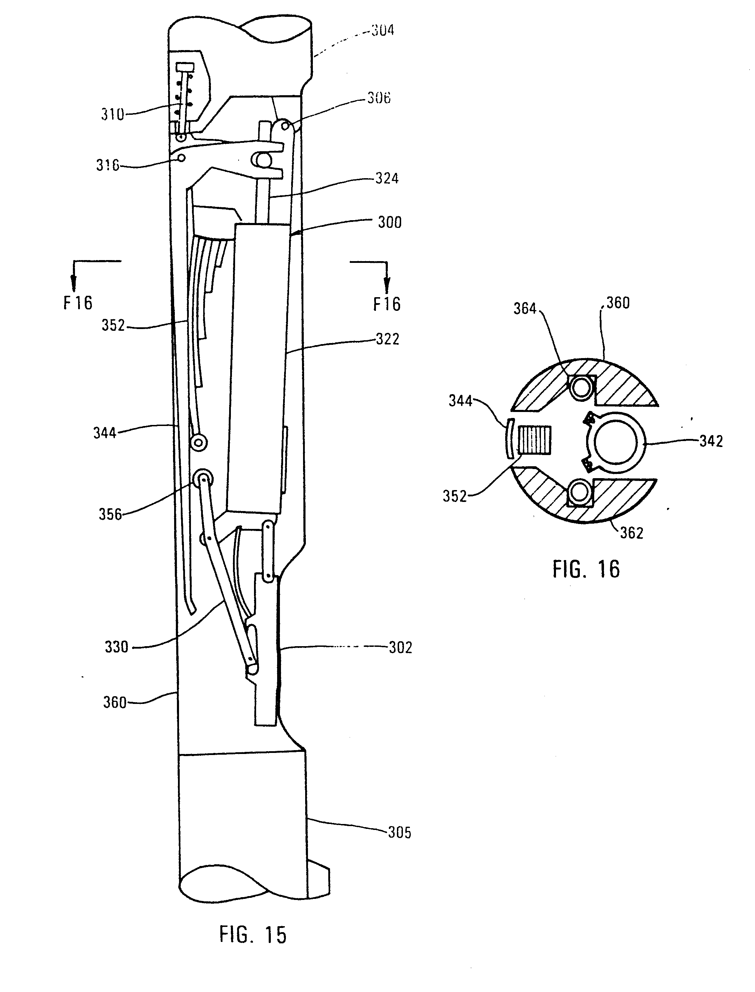

La portion inférieure de la partie 304 du corps de sonde est destinée à recevoir le patin 302, le bras 300 et le contre-bras 344 en position reliée, comme le montrent les figures 15 et 16. La portion inférieure de la partie 304 du corps de sonde comprend deux parois 360 et 362 séparées l'une de l'autre et munies d'encoches intérieures pour le passage de conducteurs 364.

Dans la position de la figure 14, où le patin 302 est en contact avec la paroi du forage 12, en vue de la mesure, le dispositif d'actionnement n'est pas en mode de fonctionnement et la tige d'actionnement 324 est librement mobile par rapport au corps 322 du dispositif d'actionnement. La position de la tige 324 est liée à l'angle d'ouverture du contre-bras 344 qui est rappelé élastiquement en contact avec la paroi, et est par conséquent représentative du diamètre du forage 12. Un signal indicateur de ce diamètre est produit par le détecteur de déplacement (non représenté) associé à la tige 324, par exemple, un potentiomètre.

Du fait de la liaison élastique entre le bras 300 et le corps de sonde, réalisée par la tige 310, le corps de sonde est soumis à une force élastique qui a pour effet de l'excentrer par rapport à l'axe du forage 12 et à maintenir à une valeur faible et pratiquement constante la distance entre le corps de sonde et le patin 302.

Si l'on souhaite refermer le bras 302 et le contre-bras 344, on fait fonctionner le dispositif d'actionnement 322. La tige d'actionnement 324 se déplace de façon à faire pivoter le contre-bras 344 contre l'action du ressort 352. Le contre-bras 344 pivote vers l'intérieur jusqu'à venir en butée sur une roulette 366 montée à l'extrémité d'un prolongement de la biellette inférieure 330. Lorsque le contre-bras est ainsi en butée, la poursuite du déplacement de la tige 324 fait pivoter le bras 300 vers l'intérieur autour du pivot 306 jusque dans la position représentée sur la figure 15.

Bien que l'invention ait été décrite à l'aide d'exemples particuliers, il est entendu qu'ils ne présentent qu'un caratère illustratif et ne limite en rien l'invention qui inclue également les variantes à la portée de l'homme de l'art.

REVENDICATIONS

1. Sonde de diagraphie de puits comprenant:

- un corps allongé pour se déplacer le long d'un forage,

- un patin de mesure prévu pour venir en contact avec la paroi du forage,

- un dispositif à bras portant ce patin et articulé sur ce corps pour permettre un écartement latéral dudit patin, caractérisé en ce que ledit dispositif à bras comprend:

- un dispositif d'actionnement comportant un élément mobile,

- un contre-bras monté pivotant sur ledit dispositif à bras et relié positivement audit élément mobile et

- des moyens élastiques pour écarter ledit contre-bras vers l'extérieur dudit corps pour venir au contact de la paroi du forage du côté diamétralement opposé audit patin, ledit élément mobile étant actionnable sélectivement pour ramener ledit contre-bras contre l'action desdits moyens élastiques.

2. Sonde de diagraphie selon la revendication 1, caractérisée par le fait que ledit dispositif d'actionnement comprend un vérin à simple effet.

3. Sonde de diagraphie selon la revendication 1, caractérisée en outre par le fait qu'elle comprend des moyens de liaison élastique reliant ledit dispositif à bras et ledit corps.

4. Sonde de diagraphie selon la revendication 3, caractérisée par le fait que lesdits moyens de liaison élastique sont reliés audit dispositif à bras à proximité immédiate de l'articulation dudit contre-bras sur ledit dispositif à bras.

5. Sonde de diagraphie selon la revendication 4, caractérisée par le fait que lesdits moyens élastiques agissant sur ledit contre-bras sont constitués par un ressort fixé sur une partie du dispositif à bras.

6. Sonde de diagraphie selon la revendication 1, caractérisée en outre par le fait qu'elle comprend des éléments d'écartement disposés longitudinalement sur ledit corps des deux côtés dudit patin.

7. Appareil destiné à contraindre l'application du patin de mesure d'une sonde de diagraphie d'un puits, sur la paroi d'un forage traversant une formation souterraine, caractérisé par le fait qu'il comporte:

- un bras primaire comprenant un dispositif d'actionnement pourvu d'un élément mobile, et un élement de prolongement solidaire dudit dispositif d'actionnement et articulé sur le corps de ladite sonde,

- un contre-bras monté pivotant sur ledit élément de prolongement du côté diamétralement opposé audit bras primaire, et positivement relié audit élément mobile, et

- des moyens élastiques pour écarter ledit contre-bras vers l'extérieur du corps de ladite sonde pour l'amener en contact avec la paroi du forage.

8. Appareil selon la revendication 7, caractérisé en outre par le fait qu'il comprend des moyens élastiques situés entre ledit élément de prolongement et le corps de ladite sonde de diagraphie en vue d'excentrer ladite sonde de diagraphie.

0131517

REPARTITION RADIALE DES RESISTIVITES
$(R_{mf} \gg R_{w},$ LIT AQUIFERE)

FIG. 1

FIG. 6

0131517

FIG. 2

0131517

FIG. 3

FIG. 4

GENERATEUR DE SIGNAUX 94

FIG. 5

0131517

## FIG. 7

140 — DEFINIR LA SONDE ET LA FORMATION

142 — DEFINIR LE PROFIL

144 — MESURER $R_m$ ET $R_t$ A UNE PROF. DONNEE

146 — MESURER $R_a - R_j$ A UNE PROFONDEUR DONNEE

148 — PRENDRE R(1), R(2), R(3)

150 — PRODUIRE $R_a - R_j$ SYNTHETIQUE ET FONCT. RESIDUELLE

152 — MINIMISER LA FONCTION RESIDUELLE

154 — CONVERGENCE ?

NON

OUI

156 — MODIFIER R(1), R(2), R(3)

158 — ENREGISTRER $R_{xo}$ POUR UNE PROFONDEUR DONNEE

## FIG. 8

MANDRIN

1.0

$h_{xo}$

$R_1$

$h_2$

$h_1$

$R(3) = R_{xo}$

R(1)

R(2)

R

0   2.0   4.5   $4.5 + h_{xo}$

RAYON (pouce)

0131517

FIG. 9

0131517

210

224

212

216g
218g

216f
218f

216e
218e

216d
218d

218abc
216c
216b
216a

214

228
230
226

**FIG. 10**

Z

239

242

240

236

238

234

8

7

6

5

4

3

2

1

0

$10^{2}$

$10^{3}$

$10^{4}$

J(Z)

**FIG. 13**

FIG. 11

FIG. 12

FIG. 14

0131517

FIG. 15

FIG. 16